# EUROPEAN PATENT APPLICATION

(11) **EP 1 174 661 A1**
(43) Date of publication of application: **23.01.2002**
(21) Application number: 01306043.9
(22) Date of filing: 13.07.2001
(51) Int. Cl.: F21V 8/00

(54) **A luminaire**

(30) Priority: 17.07.2000 EP 00306069
(71) Applicant: Designedge Europe Limited, London WC2B 6PA (GB)
(72) Inventor: Hamilton, Alan James, Dartford, Kent, DA1 3NE (GB)
(74) Representative: Brookes Batchellor

(57) **Abstract**

According to a second aspect of the present invention there is provided a luminair comprising a panel of transparent material with at least one edge, an array of speckles formed on at least one surface of the panel disposed along the edge characterised in that a light source is remote from the edge and one of fibre optic, polyoptic or liquid optic cable conducts light for transmission into the edge from a remote source.
The invention according to the second aspect of the invention may be useful in some applications in order to avoid the cost of LED's and the associated custom built circuit board since a more conventional light source may be located remotely. Also the use of light conducting devices such as fibre optics, polyoptics or liquid optics may permit a better distributed source of light along the length of the edge.

## Description

The present invention is concerned with the construction of a luminair, including the method of construction.

A conventional luminair consists of a plurality of components including at least a light source, such as a fluorescent tube and a mounting such as a socket which retains the light source and provides electrical connection to a power source. It is also common to provide a diffuser or lens and sometimes a reflector to diffuse or focus the light emitted from the source. There is also usually a protective and or decorative housing which may be required to protect the other components of the luminair from damage and to isolate the mains power supply from the surroundings.

Conventional light sources provide a point source of light or, as with a fluorescent tube, a strip of light. Fluorescent tubes can be bent into a limited range of shapes. However, to provide a near uniform light source over a large surface area it is necessary to use a large number of tubes close together or alternatively a large array of point light sources.

An alternative form of luminair able to provide a diffuse uniform light suited to sign illumination and illumination for situations where shadows needs to be illuminated is disclosed in the patent publications US 5786665, WO 96/17207, EP 0590 511 and WO 92/05535. US 5786665 appears to be the most relevant to the present invention. Luminairs of the type disclosed in US 578665 consist of a large flat panel of a transparent material such as acrylic plastics. One surface of the panel is treated with a reflective coating, such as a coat of white paint. The other light emitting surface is treated by painting, screen printing or etching to present an array of spaced speckles. A light source is disposed at one edge of the panel so that light is transmitted into the edge of the panel and is transmitted by repeated reflections from the reflecting surface and speckles towards an opposite edge. Because the speckles are spaced light is gradually emitted from the light emitting surface to provide illumination. US 5786665 proposes the use of light emitting diodes as light sources which are partially inserted into holes or grooves formed in the edge of the panel.

The cost of constructing this type of luminair is relatively high so that durability and reliability are of great importance. In some environments, particularly advertising or display applications outside the conventional luminair is vulnerable to the ingress of water which may be deposited by condensation or otherwise on the light source, reflectors lenses, diffuser and the conductors in the mounting socket causing deterioration of the luminair's performance and eventual failure by corrosion of the conductors.- The conventional luminair disclosed in US 5786665 is vulnerable to the failure of any one of the LED's forming the light source which reduces reliability.

There is a demand for a luminair which is low maintenance, capable of enduring a wide range of environments and provides a uniformly diffuse light of good and controllable colour. Ideally the luminair will also have minimal power consumption and may be shaped according to demand.

The present invention seeks to alleviate some of the problems identified above and accordingly provides a luminair comprising a panel of transparent material with at least one edge, an array of speckles formed on at least one surface of the panel and a light source having a plurality of light emitting diodes disposed along the edge characterised in that each LED is mounted on a single elongate printed circuit board (PCB) and both the PCB and the LED's are entirely received into a groove formed in the edge and encapsulated by a sealant.

The speckles may be white, translucent or opaque. The array of speckles may be a regular pattern, for example each speckle may be located at the nodes of a grid. Each speckle may be of the same shape, for example a disk. However, such arrangements may give rise to unwanted interference effects. To alleviate this problem it is preferred that the speckles are distributed stochastically subject to the density of the speckles in any domain on the surface meeting the requirement of speckle density. Another way found to alleviate the problem of interference is to make the shape of the speckle annular.

Commonly both surfaces of the panel are speckled. However, where only one surface of the panel is speckled, the opposite surface is preferably covered by a reflective membrane. The reflective membrane may be provided by a white PVC panel of between 240 and 1000 micrometers thickness, alternative reflective panels include polyboard, polished metal and possibly reflective coatings. The panel may be formed from polycarbonate or preferably acrylic sheet although it should be understood that other transparent materials such as glass may be suitable for some applications.

It may be noted here that light sources may be installed in more than one edge of the panel. In this case the speckle density will reach a maximum at a locus most remote from each edge. More than one light source may be installed in a single edge groove so allowing panels of a range of sizes to be made using light sources of standard length or of a range of standard lengths. The LED's are mounted on a printed circuit board (PCB) which is in the form of a strip which can be accommodated in the groove. The light source comprising the LED's and their mounting are completely sealed within the groove by at least partially filling the groove with any of hot melt, epoxy resin, clear silicon or tensile two pack acrylic. Occasionally the LED's may be sealed into the grooves or holes by means of waterproof white foam tape. Preferably conductors extend throughout the sealant to provide connection with a power source. However in some applications it may be preferable to provide power by inductive coupling. The LED's are thus effectively permanently an integral part of the luminair. This is possible in part because of the very high reliability and endurance (commonly in excess 100,000 hrs) of LED's and the low thermal output. The resulting luminair is thus a unitary structure substantially immune to the surrounding environment. The LED's may be pulsed invisibly fast, e.g., 100Hz, to minimise power consumption. This is particularly advantageous where the luminair is solar powered.

In order to ensure consistent voltage at each LED the PCB is made double sided with top and bottom tracks through plated or linked to minimise resistive differences between different conductor paths.

The LED's may each be of the same colour in some applications. However, it is envisioned that LED's of several colours, e.g., red, green and blue may be provided. The PCB is preferably adapted by the provision of a plurality of conductive channels to permit current delivery to selected ones or groups of the LED's allowing them to be independently illuminated. This has the benefit that failure of any one group will not cause the remaining LED's to fail. By allowing the light from differently coloured LED's to mix a wide range of light colours can be emitted from the luminair.

Particularly where several colours of LED are used it is preferable that each LED is mounted next to an LED of a different colour, i.e., where the LED's are red green and blue then the array may be a repeating sequence of red, green and blue LED's. It is also preferable that LED's of similar colour are connected as a group in common circuit so that all the LED's in the group are similarly controlled by a control means. For example all the red LED's are connected to a red circuit. All the blue LED's to a blue circuit and all the green LED's to a green circuit. There may be several groups of similarly coloured LED's and correspondingly several red, green or blue circuits. By this arrangement coloured light mixing from the LED's occurs closely adjacent to the edge allowing the generation of a uniformly coloured light. The intensity of each colour of LED can be separately controlled by the control means allowing the generation of a very large range of colours. The number of LED's in a group may vary from two to 16, or possibly more.

Further according to the present invention there is provided a method of manufacturing a luminair steps of forming a pattern of speckles on at least one surface of a panel of transparent material having an edge, forming at least one groove in said edge, mounting a light source comprising a plurality of LED's within said groove, characterised by the steps of inserting all of said light source into the groove and by filling any space in said groove with a sealant to seal said light source in said groove.

Thus the method produces a luminair according to the previous description. It should be noted that the step of forming a pattern of speckles may occur at any convenient time during the implementation of the method and not necessarily as the first step.

The speckles may be formed on the surface by any method but preferred methods include printing, particularly screen printing, etching including chemical, mechanical, electrical or painting.

The groove is preferably formed by a single pass milling and polishing step using a special tool . However, the panel may be moulded or extruded with the groove in place.

The method preferably includes the step of sealing the light source within the groove by at least partially filling the groove with hot melt, epoxy resin, silicon or two pack acrylic.

Further according to the present invention there is provided a method of operating a luminair having groups of LED's, each group of LED's being mounted in independently controllable circuits, and each LED in a group is of a similar colour but of a colour different to that of LED's in another group, comprising the step of controlling the supply of current to the LED's of the groups in order to alter the colour of light emitted from the luminair.

The method may be implemented using an EEPROM such as a PIC chip.

The luminair may be used in a display for advertising or the like and is especially advantageous where the display is outside. The light weight, durability, low power consumption and robustness, particularly the vibration tolerance make this kind of luminair especially useful in display on road vehicles such as buses, rail vehicles (trains) ships and even aircraft such as balloons and airships. The luminair may of course be used in static signs and displays, such as telephone boxes, bus shelters and the like.

The luminair may be used to create simple sign animation or to display several different signs. A first luminair as defined above may be deployed closely overlying a second similar luminair. Different images may be imposed on each luminair by virtue of the density distribution of the speckles or by means of a filter. By providing a control circuit such as an "A" stable or EEPROM to control the sequence of on off illumination of the underlying and overlying light sources the illuminated image may be seen to change during activation. By exploiting the phenomenon of persistence of vision the image may be made to appear to move. This effect may be enhanced by laminating more than two luminairs together.

A luminair constructed in accordance with the present invention will now be described by way of example only, with reference to the accompanying figures, in which:
figure 1 is a sectional elevation of one surface of the luminair, and
figure 2 is a plan of one edge of the luminair with the light source omitted, and
figure 3 is a sectional elevation of one end of a second embodiment of the luminair.
Figure 4A is a perspective view of a form of strip LED adapted for use in the luminair.
Figure 4B is a perspective view of an alternative form of strip LED adapted for use in the luminair,
Figure 5 is an elevation of a special milling tool designed for producing the groove to a different scale to figures 1-3,
Figure 6 is a section on the line A-A in figure 5,
Figure 7 is a plan view of the tool of figure 5 and 6 in use to mill out and polish the groove in a panel,
Figure 8 is a plan of each of the underside on top side of the printed circuit board (to a different scale to figures 1-3).

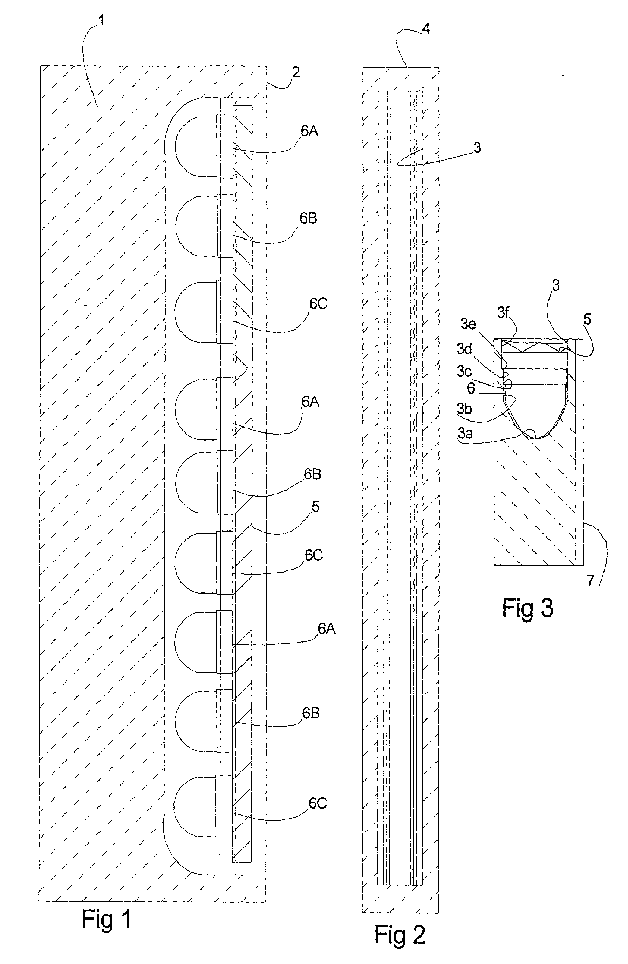

Referring to the drawings, figure 1 shows a luminair consisting of a panel of transparent acrylic material of the order of 10 mm thick, having a first surface 1 with one edge 2 provided with a light source: It should be noted that the thickness of the panel will vary according to the application and may be between 5 and 20mm at least. The surface 1 is covered by a pattern of speckles which are not shown. The distribution of the speckles is arranged such that the area of the surface covered by the speckles (i.e. the speckle density) increases progressively as the distance from the light source increases. The pattern of speckles is formed on to the first surface 1 by screen printing. In the first embodiment a similar pattern of speckles is formed on the opposing second surface of the panel. In this instance the speckles are white and translucent and of annular shape. The speckles are distributed randomly subject to the requirements of the density increasing as the distance increases from the light source. The pattern may be adjusted according to the size of the panel, the thickness of the panel and the luminance of the light source. The speckles may be "island printed", for example to present a logo by virtue of the characteristic whereby areas where speckles are absent or at low density appear dark.

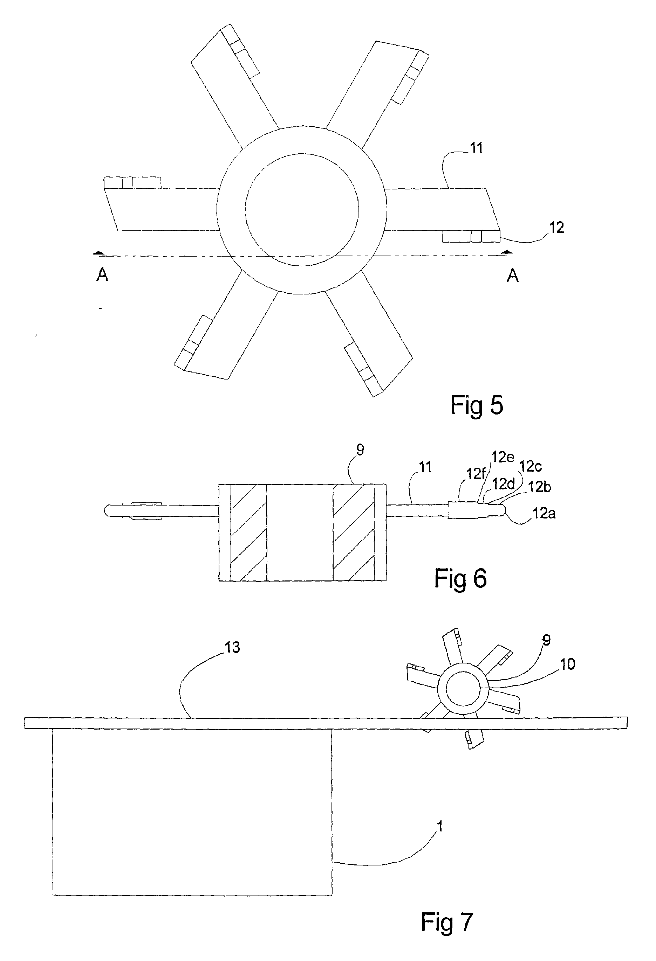

A groove 3 is milled in the edge 2 to a depth of between 10 and 15mm along the length of the edge 2 leaving only some material at the ends to form end walls 4. In some embodiments of the invention the groove may be machined away and the end walls provided by other means. The groove 3 is formed by milling and has a section consisting of an arcuate concave bottom part 3a which has two sides each of which rises to join parallel bottom side walls 3b. Each of the bottom side walls 3b extend up to join a small outwardly extending shoulder 3c which closely accommodates the profile of the LED. Median side walls 3d extend up from the shoulder 3c to an outwardly extending PCB shoulder 3e which locates the PCB 5 and hence the light source in the groove. Upper wall parts 3f extend up above the top of the PCB 5 so that a recess remains which is filled with a sealant 8. In the example it is simultaneously milled and polished using the rotary tool shown in figures 5-7.

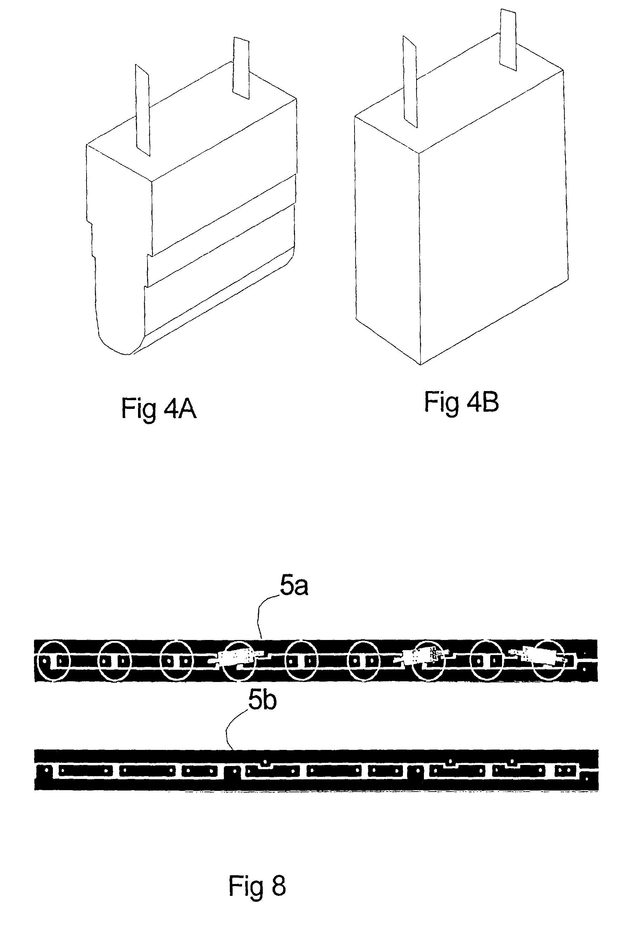

The light source consists of the elongate strip of printed circuit board (PCB) 5, shown in some detail in figure 8 sized to fit into the groove 3 and supporting an elongate array of light emitting diodes (LED's) 6 which extend in closely adjacent manner along the entire length of the PCB 5 and hence the groove 3, in the drawing 9 LED's 6 are shown more closely spaced than would ordinarily be the case in practice. The PCB 5 is seated in the groove 3 so that its external surface is sunk at least 2 to 3 mm below the rim of the upper groove walls 3f and is seated on the shoulder 3e. The profile of the groove is cut to correspond very closely to the profile of the LED's in use. While the present embodiment employs lens shaped LED's, other possibilities include the use of specially formed LED's such as those shown in figures 4A and 4b. These LED's may be of indefinite length and include a plurality of chips encapsulated in a single housing either having a lens shaped portion such as that in figure 4A or of rectangular section such as that in figure 4B. In some applications several PCB's may be electrically connected together to provide a single light source in an edge. This is particularly useful in large luminairs. In very large luminairs the voltage drop may become excessive and parallel wire connections from the voltage source to low voltage points on the PCB or PCB's may be provided. Advantageously the inner face of the PCB may be printed white to enhance light transmission into the panel.

Once in place the PCB 5 is secured by filling the groove above the PCB 5 with hot melt sealant 8 permanently sealing the PCB 5 in place. Conductors (not shown) may lead out through the hot melt sealant for connection to a power supply.

In the example the PCB 5 is 5.9 mm wide, it is double sided (as indicated by the upper side 5a and lower side 5b illustrated in figure 8. The PCB 5 uses 80 gram conductive tin plated copper track in order to minimise the voltage drop on long lengths of track and ensure even illumination of the LED's 6 without becoming uneconomic. The LED's may typically be space 10, 15, 20, 25 or 30mm apart according to the application. 3mm or 5mm LED's may be used. Preferably the LED's are grouped together, for example three LED's 6A are connected in a single conductive circuit, with a plurality of groups 6B, 6C and circuits being provided. By this means the failure of one LED will only result in the failure of one group and not the entire luminair.

This circuit arrangement has a further benefit in that differently coloured LED's for example red LED's 6A, blue LED's 6B and green LED's 6C may be used and independently controlled in order to allow the colour of the luminair to be changed at will. It will be noted from the figure that each LED 6 is mounted adjacent to LED's of a different colour to promote colour mixing close to the edge. The range of colours available is very large according to the number of colours which can be produced by mixing the colours at different levels of LED, luminance.

By way of example only the white LED's may have chromatic co-ordinates of 0.31x 0.32y and a luminous intensity in excess of 7 candelas at 20mA.

The panel can be cut into any desired shape, preferably using laser cutters or water jet cutters and may be planar or formed by heating into complex arcuate shapes.

The second embodiment of the invention shown in figure 3 differs from that of the first embodiment in that only one surface is speckled to provide a light emitting surface. The opposite surface is covered by a white PVC panel reflector 7 which is between 240 and 1000 micrometers thick and secured by adhesive tape around all its edges. The tape is a double sided adhesive tape using an acrylic based adhesive.

To produce the groove 3 with the precision and polish required for efficient light transmittance has proven to be surprisingly difficult. Drilling, cutting or attempting to mould the groove into the edge have suffered from problems caused by overheating the surface of the groove or otherwise stressing the groove surface leaving imperfections which detectably reduce the performance of the completed luminair and require further expensive finishing steps to bring the groove surface to the required standard of finish. To overcome this and produce panels at an economically competitive price, the applicant has developed the tool shown in figures 5-7. Broadly the tool consists of a hub 9 adapted to be mounted for rotation on a drive shaft and adapted to support a plurality of blades for rotation at speed around a circular path. Each of the blades preferably has a similar profile which complements the sectional profile of the light source.

In more detail the tool consists of a hub 9 adapted in conventional manner to be mounted on a rotary drive shaft 10. Six equiangularly spaced radial spokes 11 radiate from the hub to mount a blade 12, one each at the radially outer end of each spoke 11. Each blade 12 has a profile corresponding to that of the groove 3 to be cut and in this example is identical to every other blade. Thus each blade has a tip 12a of arcuate shape to cut the lens shaped bottom 3a of the groove. Radial bottom side wall edges 12b extend up from each side of tip 12a to a shoulder 12c. median side walls 12d extend up from the shoulders 12c to a PCB cutting shoulder 12e which is adapted to cut the shoulder 3e. Upper side wall cutting edges extend up from the shoulders 12e to cut the upper side walls 3e.

In use as shown in figure 7 a panel of acrylic material is placed on a deck with its edge pressed against a side wall 13. The tool is mounted on a drive shaft and rotated through a gap in the wall 13 so that only the blade engages the panel 1. The panel 1 is then advanced across the rotating tool. The rate of rotation of the tool and the rate of advance of the blade is adjusted to produce a highly polished accurately cut groove profile.

## Claims

1. A luminair comprising a panel of transparent material with at least one edge (2),
an array of speckles formed on at least one surface of the panel and a light source having a plurality of light emitting diodes (6) disposed along the edge (2),
**characterised in that** each LED (6) is mounted on a single elongate printed circuit board (PCB) and both the PCB and the LED's are entirely received into a groove (3) formed in the edge and encapsulated by a sealant.

2. A luminair according to claim 1 wherein the LED's are mounted on an elongate printed circuit board (PCB) (5) having conductors electrically in parallel formed on each side, whereby the conductance between the LED's is maximised.

3. A luminair according to claim 1 or claim 2 wherein the PCB provides a plurality of conductive channels to permit current delivery to selected ones or groups (6A, 6B, 6C) of the LED's allowing them to be illuminated independently of the other LED groups.

4. A luminair according to claim 3 wherein LED's (6) of at least two colours are mounted so that each LED (6A) is adjacent an LED (6B 6C) of another colour, and similar colours of LED (6A 6B 6C) are connected by a common circuit.

5. A luminair according to any one of the preceding claims wherein the groove is formed to have a cross section with; an arcuate bottom, bottom side portions extending up from the bottom to closely accommodate the sides of an LED (6), and a PCB shoulder extending out from each first side portion to receive an edge of the PCB (5) and an upper side portion extending up from the PCB shoulder to receive a layer of sealant.

6. A luminair according to any one of the preceding claims mounted upon a road vehicle for use in an illuminated display.

7. A luminair according to anyone of claims 1 to 5 mounted upon a rail vehicle for use in an illuminated display.

8. A luminair according to anyone of claims 1 to 5 mounted upon a water craft for use in an illuminated display.

9. A luminair according to anyone of claims 1 to 5 mounted upon an aircraft for use in an illuminated display.

10. A luminair according to any one of the preceding claims overlying a second similar luminair, each said luminair having a different image imposed theron by virtue of the density distribution of the speckles or by means of a filter, and the light sources of said first and said second luminairs being connected by a control circuit adapted to switch one luminair on when the other is off such that the luminair displays two images.

11. A luminair according to claim 10 wherein more than two similar luminairs overly and each has a different image and a control circuit to control each light source to illuminate each luminair in a predetermined sequence.

12. A method of manufacturing a luminair steps of
forming a pattern of speckles on at least one surface of a panel of transparent material having an edge (2),forming at least one groove in said edge,
mounting an light source comprising a plurality of LED's (6) within said groove, **characterised by** the steps of
inserting all of said light source into the groove and by filling any space in said groove with a sealant to seal said light source in said groove.

13. A method according to claim 12 comprising cutting said groove with a rotary tool in a single pass.

14. A method according to claim 13 wherein said tool comprises a hub supporting a plurality of angularly spaced similar blades.

15. A method according to claim 14 wherein each blade comprises an arcuate tip which cuts the bottom of the groove, a pair of parallel bottom radial edges extending from the tip which cut parallel bottom side portions of the groove, a shoulder extending out from each bottom parallel radial edge to cut a PCB shoulder and a pair of upper parallel radial edges which cut an upper side portion.

16. A method of operating a luminair having groups of LED's, (6A, 6B, 6C) each group of LED's (6A, 6B, 6C) being mounted in independently controllable circuits, and each LED (6) in a group is of a similar colour but of a colour different to that of LED's in another group, comprising the step of controlling the supply of current to the LED's of the groups in order to alter the colour of light emitted from the luminair.
